# EUROPEAN PATENT APPLICATION

(11) **EP 2 071 530 A1**
(43) Date of publication of application: **17.06.2009**
(21) Application number: 08170302.7
(22) Date of filing: 28.11.2008
(51) Int. Cl.: G07F 7/10, G07F 7/00

(54) **Authentication device and payment system**

(30) Priority: 04.12.2007 IT TO20070877
(71) Applicant: Farimex S.A., 1206 Geneva (CH)
(72) Inventor: Niklan, Alexandre, 1206, COLOGNY (CH)
(74) Representative: Dini, Roberto

(57) **Abstract**

The payment system according to the present invention comprises an electronic payment device (2) and an authentication device (1) connected (3) together; the payment device (1) comprises a bank card reader (27); the authentication device (1) comprises a fingerprint reader (16) and is adapted to make fingerprint comparisons. When the payment device (2) carries out a payment, in addition to the usual operations, it reads user identification information from a bank card (5) associated to the bank card reader (27) and it authenticates the identity of the user carrying this bank card by means of the authentication device (1) connected thereto.

## Description

The present invention relates a payment system and to their components, particularly to its authentication device.

Credit cards and debit cards, i.e. bank cards, are commonly used for payments; there are basically two kinds of bank cards: magnetic cards (comprising a magnetic strip for storing data) and electronic cards (comprising a microchip for storing data). Very often an electronic payment device (generally called POS [Point Of Sale]) is used for carrying out credit and debit card payments.

In order to authorize a payment, a traditional electronic payment device reads through its keyboard user authentication information (generally a PIN [Personal Identification Number]) and makes a comparison of the user authentication information read from the keyboard with a reference user authentication information either stored within the bank card or received from a remote databank; if they match the payment is authorized.

Nowadays every person is obliged to remember user authentication information for many different reasons: the PIN of one or more bank cards, the PIN of one or more phone cards (SIM and USIM cards), ... ; in all these cases, user identification information is stored within the card and need not be remembered by the user.

In order to solve this problem, some people write this information on e.g. a little piece of paper and put it in the wallet; in this way, security is largely reduced. Furthermore, PINs can be easily discovered by spying on the users.

Identification by means of fingerprints has just started to be used in the field of personal computers: instead of inputting login credentials a user may put his fingertip on a fingerprint reader integrated within the personal computer.

It is the general object of the present invention to apply fingerprint technology to electronic payment devices for user authentication purposes.

The Applicant has considered that designing of a new electronic payment device from scratch is very complex and expensive.

Therefore, it is a more specific object of the present invention to apply fingerprint technology to electronic payment devices in such a way as to limit the redesign of the electronic payment devices.

The solution sought should be safe, reliable and simple.

Therefore the Applicant has conceived to provide an authentication device external to the payment device and to be connected to the payment device; the authentication device is adapted to read fingerprints, to make comparisons between fingerprints and to provide the results of these comparisons to the payment device.

The authentication device according to the present invention is more precisely defined in the annexed independent claim 1.

The fact that the authentication device is external to the payment device poses specific technical problems relating especially to security and power supply. Technical features used for overcoming these problems are set out in the annexed claims dependent upon independent claim 1.

Even if the solution conceived by the Applicant limits the redesign of the electronic payment devices, some changes are necessary.

Therefore, according to another aspect, the present invention relates also to an electronic payment device as set out in annexed independent claim 10 and its dependent claims.

Finally, the present invention provides a new payment system as set out in annexed independent claim 20 and its dependent claims.

The annexed dependent and independent claims are an integral part of the present description.

The present invention will become more apparent from the following description to be considered in conjunction with the annexed drawings wherein:

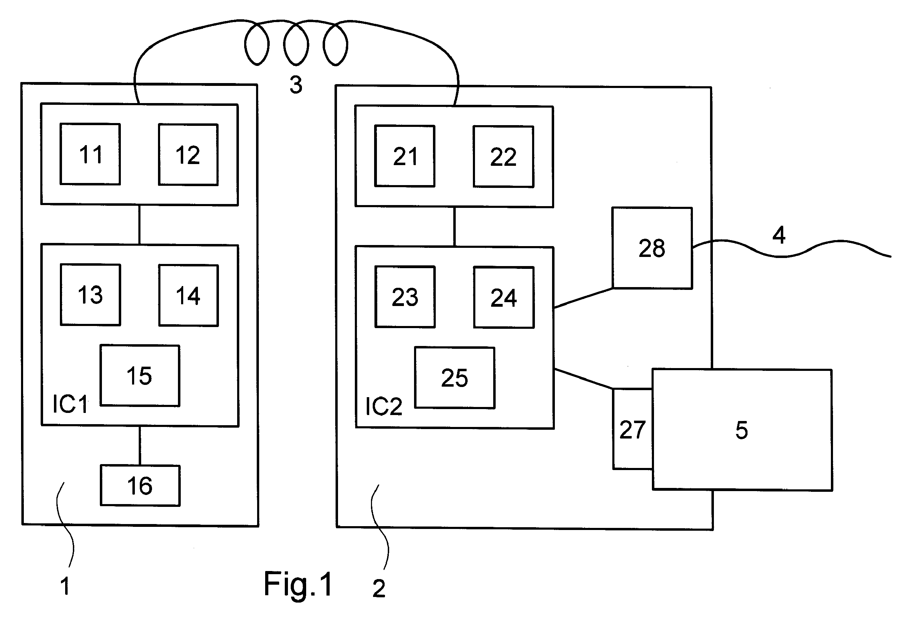

Fig.1 shows a much simplified block diagram of an embodiment of a payment system according to the present invention.

It is to be understood that the following description and the annexed drawings are not to be interpreted as limitations of the present invention but simply as exemplifications; additionally, the following description will deal only with the technical aspects that are relevant and specific to the present invention while other technical aspects are omitted and may be implemented according to known solutions.

Fig.1 shows an authentication device 1 according to the present invention and an electronic payment device 2 according to the present invention; devices 1 and 2 are connected by a cable 3 that is used for transferring both information and electric power supply. The combination of devices 1 and 2 (appropriately connected together) constitutes a payment system according to the present invention.

Fig.1 shows also a cable 4 and an electronic bank card 5; cable 4 is used to connect the payment device with the databank of an entity dealing with financial transactions, in particular payments.

Authentication device 1 comprises an electronic system IC1 provided with a processor 15, a first memory area 13 for programs and at least a second memory area 14 for data, a fingerprint reader 16 connected to the electronic system IC1, a transmitter 11 connected to the electronic system IC1, and a receiver 12 connected to the electronic system IC1.

In the embodiment of Fig.1, the electronic system is indicated with reference IC1 [Integrated Circuit 1] as it is integrated in a single microchip; such microchip may well comprise other circuits (for example communication interfaces, digital-to-analog and analog-to-digital converters, ...) in addition to processor 15 and memory areas 13 and 14.

In the embodiment of Fig.1, the transmitter 11 and the receiver 12 are parts of a communication unit which could be integrated into microchip IC1; this communication unit is of the type adapted for serial cable communication through cable 3.

In the embodiment of Fig.1, cable 3 transfers also electric power supply from device 2 to device 1. Therefore, device 2 comprises a power supply circuit (not shown in the figure) generating a power supply electric signal and transmits it through cable 3 to device 1; device 1 comprises a power supply circuit (not shown in the figure) that receives the power supply electric signal from cable 3 and provides electric power supply to the other circuits of device 1 including the communication unit, the fingerprint reader and the electronic system. Alternatively, but less advantageously, device 1 could comprise a battery as an electric power supply source.

In the embodiment of Fig.1, some of the electric circuitry within device 2 is similar to some of the circuitry within device 1. In fact, payment device 2 comprises an electronic system IC2 provided with a processor 25, a first memory area 23 for programs and at least a second memory area 24 for data, a fingerprint reader 16 connected to the electronic system IC2, a transmitter 21 connected to the electronic system IC2, and a receiver 22 connected to the electronic system IC2; the electronic system is indicated with reference IC2 [Integrated Circuit 2] as it is integrated in a single microchip; such microchip may well comprise other circuits (for example communication interfaces, digital-to-analog and analog-to-digital converters, ...) in addition to processor 25 and memory areas 23 and 24; the transmitter 21 and the receiver 22 are parts of a communication unit which could be integrated into microchip IC2; this communication unit is of the type adapted for serial cable communication through cable 3.

Additionally, payment device 2 comprises a bank card (contact and/or contactless) reader 27 connected to the electronic system IC2, and a remote communication unit 28 connected to the electronic system IC2 for communication with an external databank (of an entity dealing with financial transactions) through cable 4.

It is to be noted that, very often, electronic payment devices currently used and already on the market already comprise one or more communication unit like the one shown in Fig.2 connected to cable 3; such communication units are general purpose and are used for communicating to e.g. a keyboard, a display, another circuit within the device.

Therefore, the solution according to the present invention does not require additional hardware within the payment device.

On the contrary, the solution according to the present invention does require additional software (or, more appropriately, "firmware") within the payment device in order to implement the functional features of the fingerprint authentication; in the embodiment of Fig.1, such new software is stored in the memory area 23.

Basically, according to the present invention, when device 2 carries out a payment, (in addition to the usual operations) it reads user identification information from the bank card associated to reader 27 and it authenticates the identity of the user carrying this card by means of device 1 connected thereto.

To this purpose, device 1 reads the current fingerprint of the user carrying this card, makes a comparison between the current fingerprint and a reference fingerprint and transmits the result of this comparison to device 2; coded information relating to the reference fingerprint is received by device 1 from device 2; device 2 may read the reference fingerprint coded information either from the bank card associated to reader 27 (if it is an electronic card with fingerprint information stored therein) or from a remote databank connected to unit 28 (if the bank card associated to reader 27 is not an electronic card or does not store fingerprint information).

If the comparison result received by device 2 is positive, device 2 completes the payment.

From the above explanation, it is clear that an electronic payment device according to the present invention located in e.g. a shop should advantageously be able to both a traditional PIN authentication and a new fingerprint authentication; in fact, while some users may be have a bank card offering fingerprint authentication others may have a traditional bank card; additionally, it is also to be considered that the fingerprint reader could be broken.

In general, fingerprint authentication is preferable as it is easier and safer both for the buyer and for the seller, so it should be used for any payment whenever possible; the combination of PIN authentication and fingerprint authentication would be even safer but probably excessive.

It is to be noted that even if a bank card offers fingerprint authentication, it should also offer PIN authentication so that it can be used in association to any electronic payment device, be it according to the present invention or not.

In the following the present invention will be described under general terms.

In general, the authentication device according to the present invention comprises:
- an electronic system provided with a processor, a first memory area for programs and at least a second memory area for data,
- a fingerprint reader connected to said electronic system,
- a transmitter connected to said electronic system,
- a receiver connected to said electronic system;
in the first memory area there are stored such program instructions that the authentication device is adapted to carry out the following steps:
A) receiving through said receiver coded information relating to a reference fingerprint,
B) reading through said reader a current fingerprint,
C) making a comparison through said processor of said current fingerprint with said reference fingerprint, and
D) transmitting through said transmitter the result of said comparison in a coded and preferably encrypted format.

In this way, a reasonable degree of reliability and safety is guaranteed, especially to the comparison result which is the most critical piece of information exchanged. Said step A may provide for the reception of coded and encrypted information relating to a reference fingerprint. In this way, a reasonable degree of reliability and safety is guaranteed, also to reference fingerprint information - such information belongs to a specific user, i.e. the holder of the bank card, so it is private and should be kept confidential.

In said first memory area there may be stored such program instructions that the authentication device is adapted to establish through said transmitter and said receiver a secure communication channel with an external electronic payment device. In this way, a good degree of safety is guaranteed to the communication between the two devices.

In said first memory area there may be stored such program instructions that the authentication device is adapted to communicate through said transmitter and said receiver with only one external electronic payment device , the identity of said external device being determined by configuration of the authentication device. In this way, a good degree of safety is guaranteed to the payment system as a whole; in fact, it would not be possible to replace e.g. the authentication device with e.g. a fake and fraudulent device. Each of the two devices may be associated to an own identification code (that could also be a IP address); both identification codes may be stored within e.g. the program memory area of each of the two devices; when the two devices start communicating they cross-check their identities based on the code information stored in their memory areas and continue communicating only if the cross-check is positive. The association of the two devices may be carried out during a configuration phase of the two devices, for example when software is stored into their program memory areas; alternatively, the configuration may consist for example in fitting a memory card or smartcard (with appropriate data) into the device - this card is not to be confused with the bank card of the user.

In said first memory area there may be stored such program instructions that the authentication device is adapted to encrypt and decrypt information according to a fixed and predetermined algorithm and preferably according to an encryption key, said encryption key being fixed and predetermined or variable and received or variable and calculated. In this way, a good degree of safety is guaranteed to the communication between the two devices. Reference is made herein to the rich technical literature about cryptography.

Said electronic system may comprise a microchip integrating at least said processor, said first memory area and said second memory area, said first memory area being preferably OTP [One Time Programmable] type, said first and second memory areas being preferably not readable from outside the microchip. In this way, the environment in which fingerprint information are processed is very safe and the possibility of frauds is reduced.

Particularly, such microchip may be located within a smartcard associated to the authentication device. In this way, the environment is even safer.

It is to be noted that if a safe communication between the two devices is provided (through e.g. a secure communication channel) and if two safe processing environments are provided within the two devices, the payment system as a whole will be extremely safe.

Said transmitter and said receiver may be of a type adapted to cable communication; this is a very simple (therefore cheap) and effective alternative. A different and more complicate alternative is to connect the authentication device and the payment device by means of a wireless connection; in this case, a very safe and reliable communication technology is ZiggBee, but the BlueTooth technology is not to be excluded.

Regarding electric power supply for the authentication device, a simple and effective solution consists in transferring electric power supply from the payment device to the authentication device by means of a cable; to this regard, the authentication device may comprise a cable and/or a connector for such a cable.

If a cable is provided for connecting the authentication device and the payment device, it is advantageous to use it both for communication and for power supply. Even if the solution conceived by the Applicant limits the redesign of the electronic payment devices, some changes are necessary so that the authentication device and the payment device have specular operations as it will be clear from the following.

In general, the electronic payment device according to the present invention comprises:
- an electronic system provided with a processor, a first memory area for programs and at least a second memory area for data,
- a bank card reader connected to said electronic system,
- a transmitter connected to said electronic system,
- a receiver connected to said electronic system,
- a remote communication unit connected to said electronic system;
in the first memory area there are stored such program instructions that, in order to authorize a payment, the payment device is adapted to carry out the following steps:
A) reading through said reader coded information relating to a reference fingerprint,
B) transmitting through said transmitter said coded fingerprint information,
C) receiving through said receiver the result of a comparison between fingerprints in a coded and preferably encrypted format.

In this way, fingerprint authentication is achieved with a reasonable degree of reliability and safety especially for the comparison result which is the most critical piece of information exchanged.

The electronic payment device may comprise further a keyboard connected to said electronic system; in the first memory area there are stored such program instructions that, in order to authorize a payment, the payment device is adapted to read through said keyboard current user authentication information and to make a comparison of said current user authentication information with reference user authentication information.

In this way, PIN authentication is achieved.

Said step B may provide for the transmission of fingerprint information in a coded and/or encrypted format.

In said first memory area there may be stored such program instructions that the payment device is adapted to establish through said transmitter and said receiver a secure communication channel with an external authentication device.

In said first memory area there may be stored such program instructions that the payment device is adapted to communicate through said transmitter and said receiver with only one external authentication device, the identity of said external device being determined by configuration of the device.

In said first memory area there may be stored such program instructions that the payment device is adapted to encrypt and decrypt information according to a fixed and predetermined algorithm and preferably according to an encryption key, said encryption key being fixed and predetermined or variable and received or variable and calculated.

Said electronic system may comprise a microchip integrating at least said processor, said first memory area and said second memory area, said first memory area being preferably OTP [One Time Programmable] type, said first and second memory areas being preferably not readable from outside the microchip.

In order to authorize a payment, said electronic system may be adapted to make one or more comparisons through a smartcard associated to the payment device; such smartcard could also be the bank card associated to the device.

Said transmitter and said receiver may be of a type adapted to cable communication.

Regarding electric power supply for the authentication device, a simple and effective solution consists in transferring electric power supply from the payment device to the authentication device by means of a cable; to this regard, the payment device may comprise a cable and/or a connector for such a cable.

If a cable is provided for connecting the authentication device and the payment device, it is advantageous to use it both for communication and for power supply. The components of a payment system according to the present invention have just been defined; therefore, the system comprises essentially an authentication device and an electronic payment device.

The two devices are advantageously connected by means of an electric cable; the cable may be adapted to transfer information between the two devices, may be adapted to transfer electric power supply from the payment device to the authentication device, and preferably may be adapted to both transfers.

## Claims

1. Authentication device (1) comprising:
- an electronic system (IC1) provided with a processor (15), a first memory area (13) for programs and at least a second memory area (14) for data,
- a fingerprint reader (16) connected to said electronic system (IC1),
- a transmitter (11) connected to said electronic system (IC1),
- a receiver (12) connected to said electronic system (IC1);
wherein in said first memory area (13) there are stored such program instructions that the device (1) is adapted to carry out the following steps:
A) receiving through said receiver (12) coded information relating to a reference fingerprint,
B) reading through said reader (16) a current fingerprint,
C) making a comparison through said processor (15) of said current fingerprint with said reference fingerprint, and
D) transmitting through said transmitter (11) the result of said comparison in a coded and preferably encrypted format.

2. Authentication device (1) according to claim 1, wherein said step A provides for the reception of coded and encrypted information relating to a reference fingerprint.

3. Authentication device (1) according to claim 1 or 2, wherein in said first memory area (13) there are stored such program instructions that the device (1) is adapted to establish through said transmitter (11) and said receiver (12) a secure communication channel with an external electronic payment device (2).

4. Authentication device (1) according to claims 1 or 2 or 3, wherein in said first memory area (13) there are stored such program instructions that the device (1) is adapted to communicate through said transmitter (11) and said receiver (12) with only one external electronic payment device (2), the identity of said external device (2) being determined by configuration of the device (1).

5. Authentication device (1) according to any of the preceding claims, wherein in said first memory area (13) there are stored such program instructions that the device (1) is adapted to encrypt and decrypt information according to a fixed and predetermined algorithm and preferably according to an encryption key, said encryption key being fixed and predetermined or variable and received or variable and calculated.

6. Authentication device (1) according to any of the preceding claims, wherein said electronic system (IC1) comprises a microchip (IC1) integrating at least said processor (15), said first memory area (13) and said second memory area (14), said first memory area (13) being preferably OTP type, said first and second memory areas (13, 14) being preferably not readable from outside the microchip (IC1).

7. Authentication device (1) according to claim 6, wherein said microchip is located within a smartcard associated to the device.

8. Authentication device (1) according to any of the preceding claims, wherein said transmitter (11) and said receiver (12) are of a type adapted to cable communication.

9. Authentication device (1) preferably according to claim 8, comprising a communication cable connector and/or a communication cable (3), and wherein the device (1) is adapted to receive electric power supply through said connector and/or said cable (3).

10. Electronic payment device (2) comprising:
- an electronic system (IC2) provided with a processor (25), a first memory area (23) for programs and at least a second memory area (24) for data,
- a bank card reader (27) connected to said electronic system (IC2),
- a transmitter (21) connected to said electronic system (IC2),
- a receiver (22) connected to said electronic system (IC2),
- a remote communication unit (28) connected to said electronic system (IC2);
wherein in said first memory area (23) there are stored such program instructions that, in order to authorize a payment, the device (2) is adapted to carry out the following steps:
A) reading through said reader (27) coded information relating to a reference fingerprint,
B) transmitting through said transmitter (21) said coded fingerprint information,
C) receiving through said receiver (22) the result of a comparison between fingerprints in a coded and preferably encrypted format.

11. Electronic payment device (2) according to claim 10, comprising further a keyboard connected to said electronic system (IC2);
wherein in said first memory area (23) there are stored such program instructions that, in order to authorize a payment, the device (2) is adapted to read through said keyboard current user authentication information and to make a comparison of said current user authentication information with reference user authentication information.

12. Electronic payment device (2) according to claim 10 or 11, wherein said step B provides for the transmission of fingerprint information in a coded and/or encrypted format.

13. Electronic payment device (2) according to claim 10 or 11 or 12, wherein in said first memory area (23) there are stored such program instructions that the device (2) is adapted to establish through said transmitter (21) and said receiver (22) a secure communication channel with an external authentication device (1).

14. Electronic payment device (2) according to any of claims from 10 to 13, wherein in said first memory area (23) there are stored such program instructions that the device (2) is adapted to communicate through said transmitter (21) and said receiver (22) with only one external authentication device (1), the identity of said external device (1) being determined by configuration of the device (2).

15. Electronic payment device (2) according to any of claims from 10 to 14, wherein in said first memory area (23) there are stored such program instructions that the device (2) is adapted to encrypt and decrypt information according to a fixed and predetermined algorithm and preferably according to an encryption key, said encryption key being fixed and predetermined or variable and received or variable and calculated.

16. Electronic payment device (2) according to any of claims from 10 to 15, wherein said electronic system (IC2) comprises a microchip (IC2) integrating at least said processor (25), said first memory area (23) and said second memory area (24), said first memory area (23) being preferably OTP type, said first and second memory areas (23, 24) being preferably not readable from outside the microchip (IC2).

17. Electronic payment device (2) according to any of claims from 10 to 16, wherein, in order to authorize a payment, said electronic system is adapted to make one or more comparisons through a smartcard associated to the device.

18. Electronic payment device according to any of claims from 10 to 17, wherein said transmitter (21) and said receiver (22) are of a type adapted to cable communication.

19. Electronic payment device (2) preferably according to claim 18, comprising a communication cable connector and/or a communication cable (3), and wherein the device (2) is adapted to transmit electric power supply through said connector and/or said cable (3).

20. Payment system comprising:
- an authentication device (1) according to any of claims from 1 to 9, and
- an electronic payment device (2) according to any of claims from 10 to 19.

21. Payment system according to claim 20, comprising an electric cable (3) connected to said devices, said cable (3) being adapted to transfer information between said devices (1, 2).

22. Payment system according to claim 20 or 21, comprising an electric cable (3) connected to said devices, said cable (3) being adapted to transfer electric power supply from said electronic payment device (1) to said authentication device (2).
